# EUROPEAN PATENT APPLICATION

(11) **EP 1 892 558 A2**
(43) Date of publication of application: **27.02.2008**
(21) Application number: 06725810.3
(22) Date of filing: 09.03.2006
(51) Int. Cl.: G02B 27/22, H04N 13/00

(54) **3D IMAGE CAPTURE CAMERA AND NON-STEREOSCOPIC 3D VIEWING DEVICE THAT DOES NOT REQUIRE GLASSES**

(30) Priority: 10.03.2005 ES 200500568
(71) Applicant: Garcia Galarraga, Miguel, E-28029 Madrid (ES)
(72) Inventor: Garcia Galarraga, Miguel, E-28029 Madrid (ES)
(74) Representative: Capitan Garcia, Maria Nuria
(86) International application number: PCT/ES2006/000112
(87) International publication number: WO 2006/095040

(57) **Abstract**

The invention relates to a system that is used to capture and reproduce 3D images such that they can be viewed without glasses. The inventive system rerolves the issue of acquisition and reproduction from multiple view points, using the characteristics of simple non-multifaceted lenses. Different images are integrated by means of sequential multiplexing over time with the use of high-speed shutters. The image varies from one point to another as the eye of the observer moves laterally, such that the image that arrives at each eye is different, as if present, without requiring glasses and without comprising intermediate zones in which the image is blurred. The invention comprises a system in which the reproducer creates continuations of the light trejectories that reach the camera, such that combined operation of both components enables the caprutre and reproduction of 3D images. The system comprises the image capture camera and the reproducing device. The invention is suitable for use in television transmission and in the filming and viewing of 3D video films.

## Description

### a) Technical background

The invention falls within the audiovisual sector, which includes television and video recording, and its principles may also be adapted for application to the motion picture and photography sector. The basic principles are based on optics and optical electronics for image capture and reproduction.

### b) State of the art

There are a large number of patents and devices that allow images to be viewed in three dimensions. There are different systems that currently exist to produce a three-dimensional effect on the observer.

The existing systems can be classified into three categories:
a) Systems that require the use of glasses. These systems can be called stereoscopic systems. They consist on superimposing two slightly different images obtained, for example, using two photograph, video, or movie cameras with a slight lateral shift with respect to one another, projecting the images with that same relative displacement. The use of glasses by the observer causes each one of the two superimposed images to reach the left and right eye selectively, generating the three-dimensional effect.
b) Systems that produce the effect using the relative position of the eye and the screen, with two images, which are also different, that are seen alternativally depending on the lateral displacement of the eye. The disadvantage of these systems is that there are spatial positions in which the three-dimensional effect is not generated and the image is not clear.
c) Holographic systems, in which the image varies from one point to another from the space of the observer, just as if it were moving in the space surrounding the object. These systems are normally monochromatic holograms generated using laser technology.

The first two are the only practical possibilities that can be used for transmission using television systems.

The first known device is a toy consisting of a pair of glasses equipped with a lens and a disk on which diametrically opposed pairs of slides obtained by stereoscopic photography systems are mounted.

All of these devices are based on the stereoscopic effect, which uses two different images, one for each eye, to transmit a true perception of distance.

Other systems, also developed a long time ago and very well-known in motion pictures, use glasses for polarized light, so that the image is projected on the screen from two takes, done with a slight horizontal shift of the lens, and with a filter for light polarized at angles that differ by 90° so that each eye perceives only one of the images. Other similar motion picture and photography systems, and later, video systems, used red and blue filters for one eye and the other, which also generates a different perception of the image from each one of the cameras or optical systems.

The following table indicates the results of search to determine the current state of published patents with the same objective as the related invention:

| PN | TITLE | COMMENT |
|---|---|---|
| JP2004077778 | Autostereoscopic information display | This is a display or screen. Does not specify the generation of the image to be display |
| US2003039031 | Observer-adaptive autostereoscopic display | This is a display or screen. Does not specify the generation of the image to be display |
| JP2001045521 | STEREOSCOPIC IMAGE PHOTOGRAPHING OPTICAL SYSTEM AND STEREOSCOPIC IMAGE PHOTOGRAPHING DEVICE USING IT | Device for generating photographs from a single objective for display in parallax. Not comparable in terms of function. |
| JP2000206460 | STEREOSCOPIC VIDEO DISPLAY DEVICE WITHOUT USING SPECTACLES | Screen for displaying stereoscopic images that allows simultaneous viewing by multiple observers, with all viewers seeing the same images from different points of view, but with the same perception. Uses a different philosophy and different objectives, and also resolves the display in a different way. |
| JP2000267045 | STEREOSCOPIC VIDEO DISPLAY DEVICE | Stereoscopic display system that makes use of Fresnel lenses. This system is not comparable because it requires other devices that do not form part of the invention to obtain the image and it is not intended for transmission or reception. |
| JP2000224614 | THREE DIMENSIONAL DISPLAY METHOD AND DEVICE | Uses aspects of sensory perception to perceive a certain three-dimensional effect in reproduction; does not specify details regarding how images are captured. |
| JP2000162545 | MULTI-VIEWPOINT THREE DIMENSIONAL VIDEO DISPLAY SYSTEM | This is a stereoscopic system for multiple observers (one image for each eye). Does not include image capture. |
| JP2000039588 | DEVICE FOR PROJECTING VIDEO ON STEREOSCOPIC SCREEN | System for projecting stereoscopic images with a mirror. Does not specify anything regarding image capture. |
| DE10252830 | Autostereoscopic adapter for flat panel display, includes electronic sensor unit with circuitry matching screen-lens-scanning raster configuration | Screen for displaying stereoscopic images that allows simultaneous viewing by multiple observers, with all viewers seeing the same images from different points of view, but with the same perception. Uses a different philosophy and different objectives, and also resolves the display in a different way |
| US2003234909 | STEREOSCOPIC IMAGE DISPLAY METHOD AND APPARATUS | System for the projection of stereoscopic images in motion pictures. |
| US2003076407 | Stereoscopic image-taking lens apparatus, stereoscopic image-taking system and image-taking apparatus | Camera for taking stereoscopic video images. |
| US2004218037 | 3D display using micromirrors array | Projection system using multiple micromirrors |
| ES8608697 | Improvements in cameras for forming three-dimensional images | Uses a slit-shaped objective and multiple cylinders |

The table above covers all of the descriptions identified in the national and worldwide databases that are related to three-dimensional display. Most of them are based on stereoscopy and some additional methods with parallax alignments.

The advantage of the proposed invention over earlier inventions is that it solves the problem of taking and reproducing images from multiple points of view, making use of the characteristics of single, not multi-faceted, lenses. The different images are integrated by sequential multiplexing, over time, using high-speed shutters. The three-dimensional perception is generated at all points within an arc of approximately 50° around the central vertical axis of the screen.

### c) Detailed description

The present invention consists on a system for capturing and reproducing images in three dimensions, so that they can be viewed without using glasses.

### Functional explanation.

The best way to understand how this technique functions is to think of it as a window. When you look through the glass of a window, you obtain an image with a three-dimensional perception. Let's suppose that you are looking through the window of a room; the rays of light reach the window from the outside and enter the room. If we were able to make the rays of light coming through the window of the room exit through the window of the projectors or screens, so that the thousands of light rays coming from all directions on the other side of the window that pass with the light information correspond to each point of the window glass, conserving the same intensity and color of each ray at each point, and depending on the direction, we would have a true and identical reproduction of reality.

When a photographer attempts to focus an image with a obscure camera with a lens, the lens is moved closer or farther away from the projection plane until the distance at which the image is clearest for the objects that are a particular distance away from the lens is found.

If we imagine a lens with a diameter of two meters, for example, in a gigantic obscure camera, there would also be a distance at which a particular object plane would be optimally focused. At that point, the different rays of light from a point on the object plane that pass through the lens, through all points on its surface, are located at a single point, which corresponds to the plane of the camera's sensor.

If we cover the lens with an opaque screen with a small opening, the focused image enters only through that small opening. If the opening moves along a line parallel to the horizontal diameter of the lens just in front of the lens, the image that is projected on the camera plane is the one that would be seen by the observer's eye from practically that very same point.

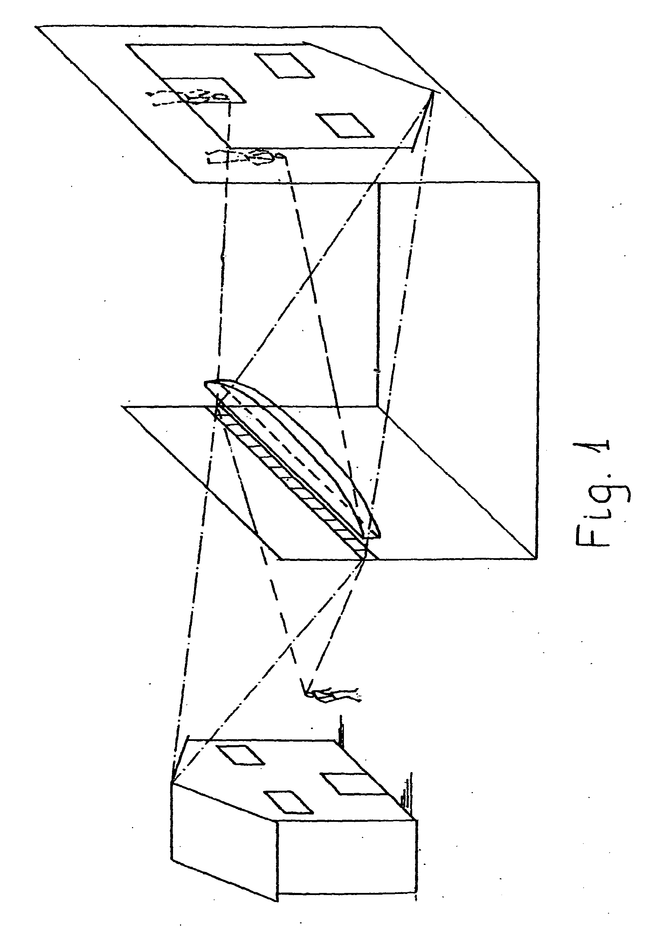

Since the image is focused for the focused object, that object does not undergo any displacement on the surface of the plate where the image is formed in the camera obscura when the opening moves from left to right or from right to left, because as the object is focused, all of the rays the pass through the lens from a point on the focused object coincide at a single point of the image. This is shown in Fig. 1.

However, the objects whose images do move when the opening is moved from right to left are the unfocused objects, which are therefore blurry. See Fig 1, the unfocused figure of the man in front of the house.

In order to reproduce the three-dimensional image, the light rays from the focused object must produce a real or virtual image in front of the observer on the screen, and the unfocused objects must appear to be at different points, depending on where they are viewed from.

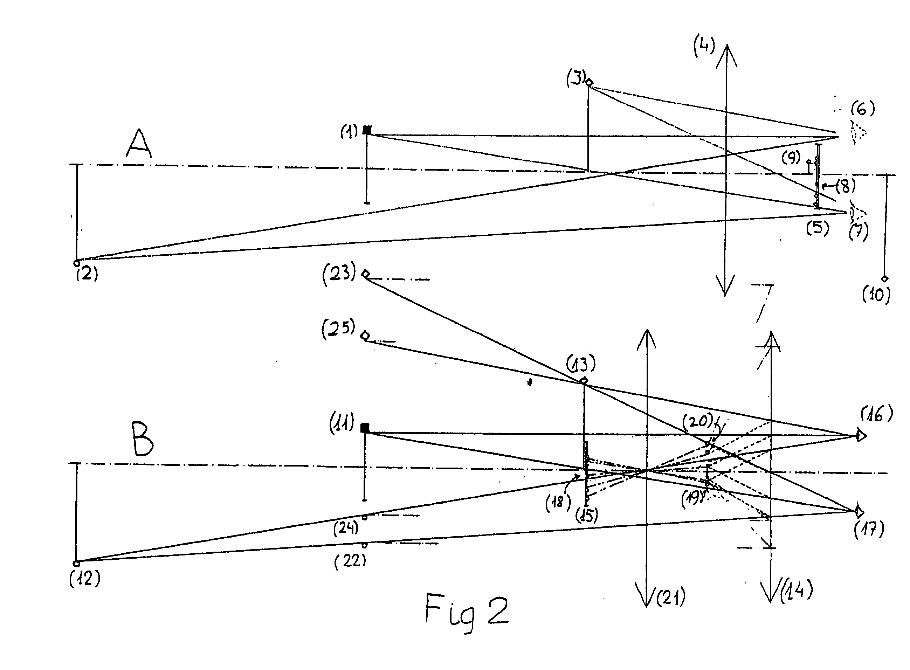

To generate a sensation of three dimensions two objectives must be fulfilled in the projector device, as shown in Fig. 2:
- In the first place, in order to have a fully three-dimensional perception, the image must be formed at a certain distance from the observer, approximately the same as the real distance, which may be closer than the screen itself, created in the space closer to the observer, and also further away, 10, 20 m, or several kilometers away.
- Secondly, the unfocused surroundings, both elements located behind the focused object and those closer than the focused object, must be modified when the position of the observer's eye shifts, so that each eye receives slightly different information, which depends on the observer's position.

To reduce the information, which begins at the very moment the signal is captured in the camera, it is helpful to make reductions that simplify the visual information to the minimum value with sensory significance. Examples of these simplifications are common in sound and image reproduction:
- Using two speakers to transmit a stereophonic signal.
- Of the infinite colors existing in nature, only three are used as basic colors and they are combined to transmit the perception of color.
- Of the infinite instants of reality, only 20 or 30 frames per second are transmitted to create the image of movement.
- The amount of information per unit of surface area of screen is one-fourth as dense for the three color signals as for the white and black signal in color televisions.

Likewise, not all of the information from the "window" is required in order to transmit a "true three-dimensional image". The following simplifications are used in capturing the image and reproducing it on the viewer:
- 1. Instead of transmitting the entire window, we "lower the blinds" and leave only a horizontal slit. The change in the image due to vertical displacement of the observer is disregarded.
- 2. Instead of transmitting a clear and precise image of all of the objects, only the focused objects are transmitted clearly. We are used to seeing that unfocused objects give a blurred image with lower resolution.
- 3. The proposed system adds the fact that the focused image is practically the same for all points of view that the camera transmits, with the image from one point of view to another being different from the unfocused objects (which are not at the "focal" distance). The different images that are obtained in a lateral shift by the observer differ in the position of the more and less distant objects relative to the focused object. If we consider that the focused object is fixed on the focused plane, in other words, that on the plane parallel to the photosensitive surface of the camera that is seen with maximum clarity, the corresponding image does not shift when there is movement from left to right, the objects that are farthest away appear to move from left to right, and those that are closest appear to move from right to left.

The proposed system is a system in which the image varies from one point to the other as the eye of the observer moves laterally, so that image that reaches each eye is different, as if it were actually there, glasses are not required and there are no intermediate zones in which the image is unclear. It is a system in which the projector creates the continuations of the light paths that reach the camera, so the functioning of both as a set allows the capture and reproduction of images in three dimensions, in other words, the projector can give a three-dimensional image that comes from signals prepared by the camera. There are other reproduction systems, for example, stereoscopic systems for a single observer, or for multiple observers, with or without glasses, whose images can be obtained from the images that are generated by the camera proposed in this invention, with specific processing that selects two locations, or pairs of locations, on the slit. It is also logically possible to generate signals with a computer, without using the camera, but these would not be images "of reality".

The most characteristic elements of this invention are the slit lens, the series of shutters, and the high-speed photo-sensor.
The slit allows a linear range of possible positions of the observer's eye. All of the images of the focused object coincide with a single image, so even though the selection of positions is discrete and non-continuous, this is not perceived in the image of the focused object. However, unfocused objects are located in different positions, depending on the point on the slit from which they are observed. These objects have diffused outlines because they are not focused, so the discrete positions do not have a perceptible effect.
In terms of the series of shutters, this allows the selection of discrete positions on the slit by selectively opening the shutters. The switches must be optical-electronic, to allow fast, flexible, and reliable control. There is a line of shutters based on magnetic-optical and optical-electrical phenomena that could be adapted for the required function.
The high-speed photo-sensitive element must be able to obtain the image for the aperture time of the optical-electronic shutter.

The following section describes the components of the invention, the camera, and the projector.

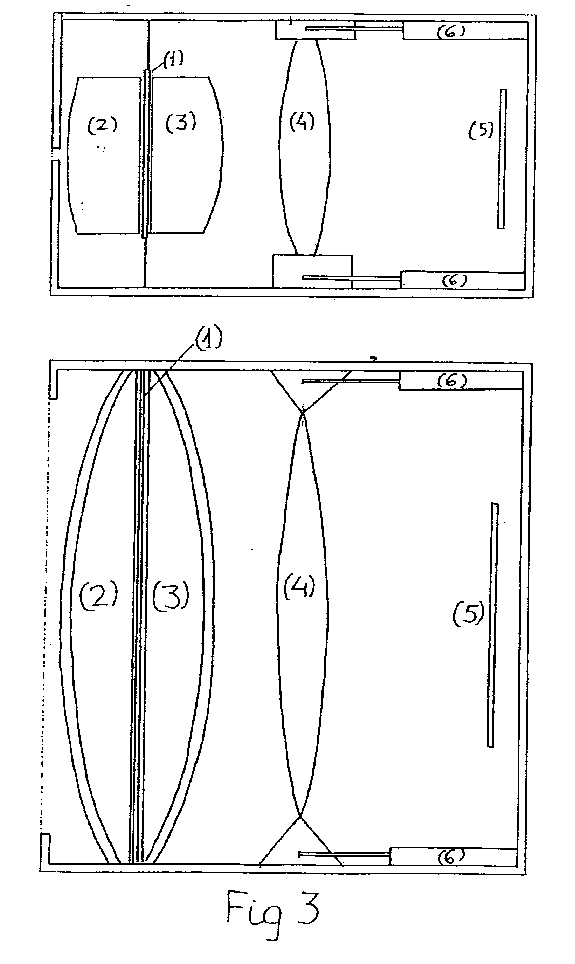

### Camera, Fig 3-

The camera includes a slit and a lens. The lens can be reduced to a cut in a lens between two planes parallel to each other and parallel to the lens axis. The lens must also have a long focal length to avoid producing aberration in the image generated by the edges of the lens. However, since the lens height is small, since only the light that passes through the horizontal slit passes through, the focal distance with respect to the height is even greater. For this reason, the requirements regarding the surface curvature in the vertical direction are less stringent than in the horizontal direction, and this could lower the production cost, using horizontal generatrices on the front surface and circular or parabolic directrices; while the generatrix will be vertical on the back surface, with a spherical or parabolic directrix in this case.
A shutter is placed in front of the lens, opening a gap in an opaque screen, which allows light to enter, and which moves from one end of the slit to the other and back again. At each one of these positions, the image generated will be slightly different from the previous one when the light passing through the hole in the screen of the device on which the image is focused is projected. The image that is processed is the image focused on the detection plane, which corresponds with a specific distance from the camera to the focused object. The information on the focal distance must be transmitted to the projector unit's controller for the positioning of the image, as well as the angular aperture or zoom. The camera must be equipped with a device for taking high speed images, on the order of 1000 to 100000 images per second, depending on the size of the slit and the desired precision of the three-dimensional effect.

### Projector.

The reproduction system contains a screen for generating images (a "television monitor", for example) a group of lenses, a system for adjusting the focus, as well as a servocontrol to control the focal position and the angular aperture, and a linear group of shutters. The flat image reproduced on a video or cathode ray screen must, in theory, be reproduced as many times as the repetition of frames captured by the camera, from 1000 to 100000 images per second, in general with images being very similar from one frame to the next. However, the number of images per second may be greater if interpolation is used, or less information is lost. The image is collected and inverted with a lens that forms a real image of the screen. This real image is collected by a second lens, and forms a virtual image that, depending on the relative distance between the lenses and the screen, is located at infinity, or on any plane at any distance from the observer. Once the light rays have passed through the second lens, they will have recovered the orientation that they had when they reached the slit in the camera, but only for a small window of the viewing window.
In order for the image seen by one eye to be different from the image seen by the other, and so that when observers move, they see different views, as occurs in reality when we move from one side to the other and we see a changing alignment of objects, a different projection must exist for each position of the open shutter of the camera. This is achieved with a shutter that opens a gap that only allows one image to pass from a point, a hole in an opaque sheet, which moves laterally in correspondence with the movement of the shutter hole in the camera. The difference is that now, instead of being a hole with similar height and width dimensions several centimeters across, it may be a vertical slit, so that the same image may be observed from different heights, within the observation cone. Within this cone, the image is not modified by varying the height of the observer, and is modified when the position changes more to the left or right of the observer. If the observers move forward or backwards, they will perceive that they are approaching the image, which will appear real to them.

### Alternatives

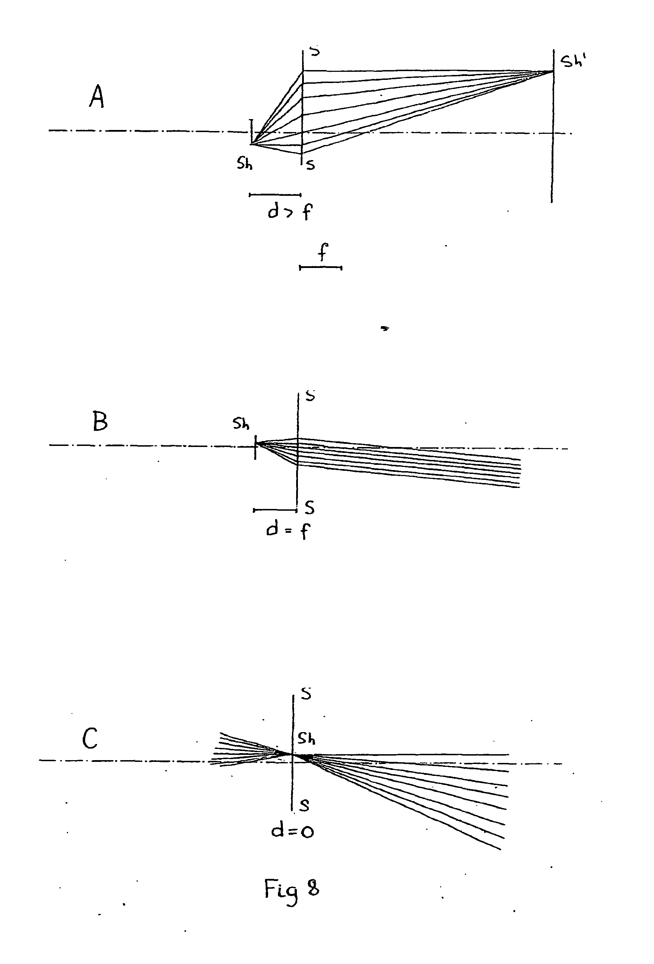

Parabolic mirrors could be used as an alternative to lenses, which would allow the focusing of the different images on a fixed position.
The placement of the series of shutters with sequential aperture allows for several alternatives. The easiest to explain is the one indicated earlier, in front of the first lens, right at the slit, in the camera, and correspondingly, right next to the lens and closer to the observer, in the case of the projector. Other alternative locations are on the focal plane of the first lens, in the camera; in the case of the projector, on the focal plane of the final lens and at some intermediate position, such as between the focal point and the screen. And also inserted in the middle of the outer lens. The effect of placing shutters at the different positions is shown in Fig. 8.

If the series of shutters is located on the focal plane of the outer lens (Fig. 8B), the functioning of the projector can be analyzed another way. The focal plane corresponds to the set of points whose real formed image is at infinity. If we are observing a distant landscape, for example, a mountain range from a distance, the moon, or the night sky, the image must be produced on the focal plane so that it will appear in the distance, at infinity, in the reproduction. There are really no noticeable variations of the focused image in this case from one point of the camera slit to another. What we find on the focal plane are angular fragments, each of which is identical to its image. If we use the focal plane for the location of the series of shutters, it would give the impression that a series of vertical lines existed in the distance. Shutters should therefore not be used on the focal plane of the outer lens when focusing on distant objects. If the projector or camera are equipped with shutters on the focal plane, they must be shifted from the focal plane when focusing on objects farther that a given distance.

However, when focusing on objects nearby, the shutters of the outer lens would also be close to the focal distance of the eye of the observer, and a series of undesired vertical lines could be visible, which would be generated as a result of using the combination of projector camera devices. It could be advisable to use the series of shutters on the focal plane, since they would be unfocused and would not be easily distinguishable by the observer. The interpretation of the functioning of the series of shutters on the focal plane can be understood in such a way that it is not a position of the slit that is selected in the camera, but rather that the main angular directions are selected, similar to the sweeps done by rotating radar antennas at airports and on ships.

When the focused objects are very close, there is a very large variation in the images that are obtained from positions that are very close in terms of lateral displacement, or in other words, for different slit shutters, which would require an increase in the number of shutters. The combined use of shutters on the focal plane and on the outer lens simplifies the construction of the devices, since it is possible to have the equivalent of n x m shutters with n shutters on the focal plane of the outer lens and m shutters next to the outer lens.

### Image processing and transmission.

The processing of the image requires methods to compress the information, so that a flow of information corresponding to the same number of times the information from a single as the number of shutters used is not required.

The use of digital compression techniques further reduces the amount of information per unit of time, based on the uniformity over time or in a particular direction, or in the repetition of frames or in other principles.

The characteristics of the image obtained with the proposed camera make it possible to simplify the information for the following reasons:
- The image corresponding to a flat surface parallel to the camera (perpendicular to the lens axis), when located exactly on the focal plane, is invariable from one position to the other of aperture of passage of light through the shutters (coincidence of focused objects)
- The images of an object, on a nearby plane but not coinciding with the focal plane, for two positions of open shutters shows a slight shift between them, and the shift is greater the larger the distance between the two positions of the open shutters (clear displacement in proximity to the focal plane)
- The image of an object that is not close to the focal plane is an image without clear outlines and would change position relative to the image when the images from two separate shutters are compared. The difference in these relative positions is greater the larger the distance from the object to the focal plane, and is greater the larger the distance between the two positions of the opening of the open shutter, being approximately proportional to both. If the object is farther than the focal plane, the relative displacement in one direction, and if it is closer, it is in the opposite direction. (Blurry displacement)

### d) Description of the drawings

**Fig.1**
   Figure 1 shows a diagram of a house with a person in front. We see the camera, with a sequence of shutters, the lens, and the image detection plate. We can see that the focused object is the house, and that the person is closer to the camera than the house. We can see how the rays of light coming from a single point of the house, the vertex of the roof, when they pass through two different shutters, coincide on a single point of the plate. However, the image of the person in front of the house generates two different images for two different shutters, in other words, for two different points of view.
**Fig.2**
   Figure 2 shows two parts, A and B. In A, we see 3 objects (1), (2) and (3), a lens (4) that forms an image on the plate (5), and a possible arrangement with two eyes (6) and (7). The object (1) produces its image with the lens (4) on (8), located on the plate itself (5). The object (3) produces its image on (10), which is not on the plate (5), which means that with two different shutters, two different images could be generated on the plate. Likewise, the object (2) produces its real image on (9), and with two different shutters, the intersection with the plate would produce two different images.
   If we now move to B, we see the image obtained when the observer at (16) and (17) is looking at the image projector. We see two lenses, (21) and (14). At the point (18), a clear image is formed on the screen (15). It is the image that is generated by the transmission of the information from the plate (5). The lens (21) will generate a real inverted image. With the lens (14), a virtual image is generated for observers (16) and (17), by extending the rays between (14) and (17). We see the virtual image of (18) in (11), which in turn corresponds to the real object (1). The other points that appear in (15) generate real images with the lens (21) on (20) and (19). These images are double and not simultaneous, and with the lens (14), they give virtual images on the plane on which the image is (11). The image on (23) appears when the shutter corresponding to the observer (17) is open, and likewise, the image on (25) appears when the shutter is open for the observer of (16). The visual impression for the observer with his eyes on (16) and (17) is that (23) and (25) are the perception of (13) from two points of view.
   This also occurs with the images (24) and (22), which are visible only from (16) and (17), and that to the observer, give the impression that they correspond to an object (12). We see that the virtual objects (11), (12) and (13) correspond to real objects (1), (2) and (3).
**Fig.3**
   In Fig. 3, we see the camera in two cross-section views. Note that the lenses and slits are much longer than they are tall. We see the string of shutters specified in (1), located between the lenses (2) and (3). There is a lens (4) that serves for the focus with the motor (6). At (5), we see the plate for capturing the image.
**Fig.4**

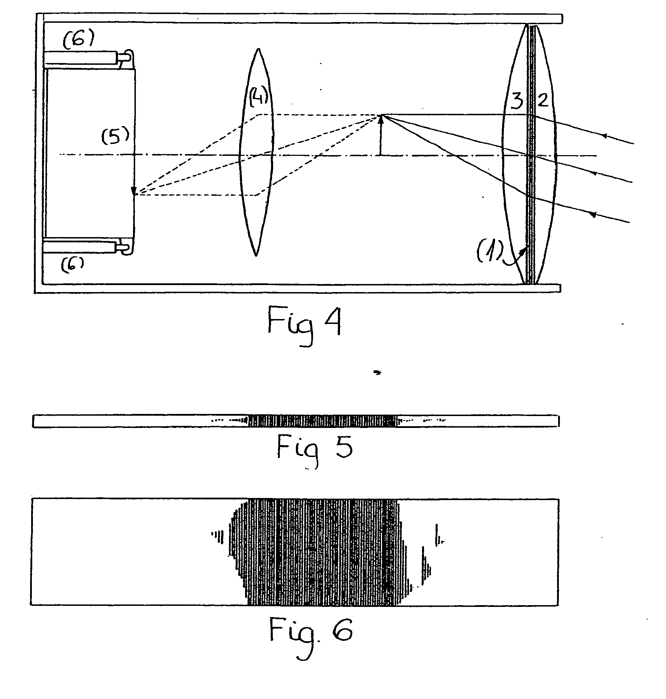

   In Fig. 4, we see the image projector. The flat two-dimensional screen is (5). The lens (4) generates a real inverted image that is seen from the outside through the lenses (2) and (3). The shutters (1) are located between lenses (2) and (3). The positioning of the virtual image is controlled with the motors (6) that position the screen (5).
**Fig.5 and Fig.6**
   In Fig. 5, we see the string of camera shutters, and in Fig. 6, the string of shutters of the projector.
**Fig.7**

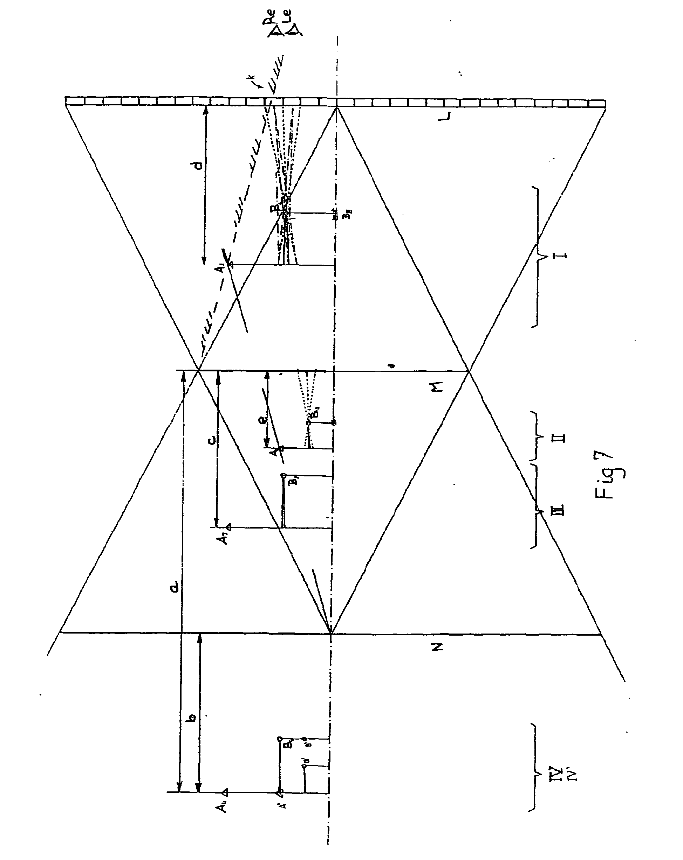

   Fig. 7 shows the functioning of the camera and of different projectors. To the right of the figure, we see the eyes of an observer, right eye, Re, and left eye, Le. The camera's string of shutters is shown in the diagram marked with the letter L. The letters N and M represent the window of two projectors. The Roman numerals I, II, III, IV, and IV' represent the different possible location of the generated images. The location indicated by I represents, at the same time, the object observed by the camera L. We can see object A₁ located at a distance, d, from the camera, which is the focused object. We can see that point B₁, since it is not the focused object, will have an image that will vary depending on which shutter is open. The figure shows the diffused projections of the views from the two shutters on the line of point A₁, which represents the focal plane. Consequently, the apparent location of B₁, which is marked as B_{z}, is an imprecise location since it is not the focused object.
   Points A₁ and B₁ also represent the images that can be seen with projector M, image that is outside of the projector, between the projector and the Re-Le observer. A₁ is the real image generated by the projector lenses from monitor image. Image B₁ also appears on the plane of A₁, but since it appears in a different position of the image for each open shutter, it reaches each eye Re-Le in a different position, so it appears as a blurry object in a slightly imprecise location, but giving a good three-dimensional impression. In order for the images produced by a projector M closer than the projector, the shutters of the projector must be located such that their image, in other words, the image of the shutters produced by the outer lens of projector M is located at L. The shutters of the projector cannot be located at L, since they would be outside of the projector, but they can be located at a position such that its image is L. In this zone I, the image A₁ can only be observed from the striped area outlined by line k. The eye Re can see A₁ but they eye Le cannot see it.
   If we now go to the image zone II, this would be an image generated by the projector M at ½ scale, in which the distance e will be half of d. The observer is in the same position Re-Le. The shutters are distributed along the length of M, on a length of half the length L. As in the previous case, the real image is A₂, while B₂ is perceived at that position as a result of the different images that reach eyes Re-Le. In this case, the shutters of the projector must be located next to the outer lens of the projector, on the outside.
   If we now go to the image zone III, this would be an image generated by the projector M at 1:1 scale, in which the distance c will be equal to d. The observer is in the same position Re-Le. The shutters are distributed along the length of M, on a length of half the length of L, but with the same density or individual shutter length, so there will only be half as many shutters as in L. As in the previous case, the real image is A₃, while B₃ is perceived at that position as a result of the different images that reach the eyes Re-Le. In this case, the shutters of the projector must also be located next to the outer lens of the projector, on the outside. But this image in zone III, can also be produced by a projector N, causing the shutters of the projector to be located on an alignment such that the real image from the shutters, produced with the last lens in projector N, is located on the line M.
   We now move on to image zone IV; the image is generated by projector N at a scale of 1:1, in which distance b will be equal to d. The observer is in the same position Re-Le. The shutters are distributed in one along the length of N, with the same individual shutter length, equal to the ones in L. As in the previous case, the real image is A₄, while B₄ is perceived at that position as a result of the different images that reach the eyes Re-Le. In this case, the shutters of the projector must also be located next to the outer lens of the projector, on the outside.
   But this image in zone IV, can also be produced by a projector N, causing the shutters of the projector to be located on an alignment such that the virtual image from the shutters, produced with the last lens in projector M, is located on the line N.
   In zone IV', a smaller image generated by projector N is displayed. It has been reduced with a scale factor. The position A' is given by the virtual image generated by the outer lens of projector N. The image B" changes to B', since the difference in the images that pass through each shutter are also affected by the same scale factor.
**Fig.8**
   Figure 8 shows the effect of shutter placement at the projector's positions.
   Part A shows a series of shutters, Sh, at a distance d>f, where f is the focal distance of the projector's outer lens. The open shutter produces an image in Sh' so that if the camera only allows light to enter through the same shutter as the one shown, only light rays that converge at the point corresponding to the real image of the open shutter Sh, Sh' will pass through the screen S. The location of the shutters as represented in this image is adequate for viewing objects "outside" of the projector screen, closer to the observer than the projector itself.
   Part B shows the case in which the plane that contains the series of shutters is located exactly at on the focal plane of the projector's outer lens. In this case, we see that only the light that comes out of Screen S in a particular direction passes through. Therefore, if the flat image focused by the projector is located at infinity, only a single color and light intensity in that direction will be visible, and as it changes from one open shutter to another, a range of directions will be observed. If the flat image is not located at infinity for the observer, in other words, if there is no real focused image on the focal plane of the projector's last lens, the image will vary depending on which image corresponds to the open shutter. Lastly, C shows the first of the possible locations, which is just on the outside or within the outer lens itself.
**Fig.9**

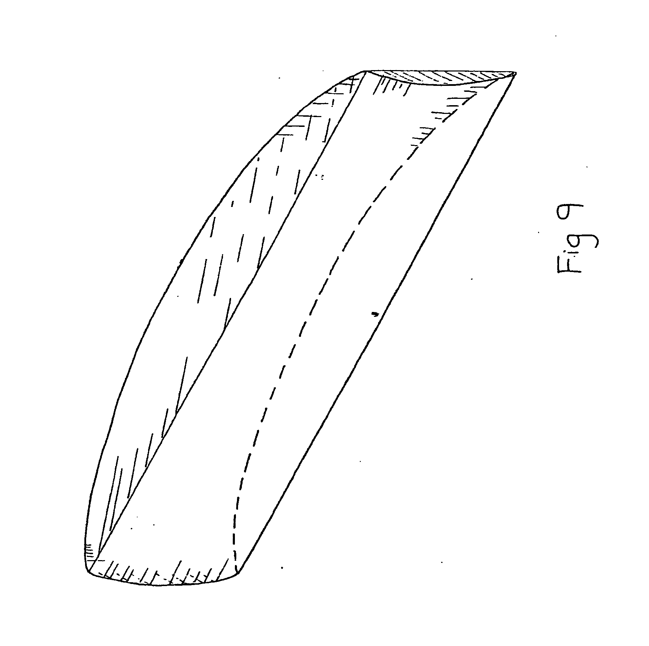

   Figure 9 shows a perspective from the slit lens.

### e) Detailed description of at least one method of execution

### f1- The camera (slit)

The simplest camera can be built as follows:
A camera obscura more than 85 cm wide and 1.5 meters deep, and 45 cm high. The front will be equipped with a horizontal slit 80 cm wide, from one side of the box to the other, 5 cm high, forming a rectangle measuring 5x80 cm. Behind the slit, inside the box, is a shutter consisting of 30 rectangular shutters measuring 2.67 x 5 cm. One next to the other. And covering the entire slit. The shutters open and close in such a way that the opening moves along the slit, although two or more shutters may be open at the same time. Behind the shutter is a convergent lens 1 m in diameter, cut to the rectangular dimensions of the box. Since only one slit is used for the light, only a fragment of the lens is required, corresponding to the limits of the two horizontal and parallel planes arranged symmetrically with respect to the focal axis of the lens. The lens has a focal distance of 1 m, and the screen to form the inverted image measures 0.4 m high by 0.71 m wide. The image formed on the screen is read by a high-speed camera that takes approximately 750 images per second, with each image corresponding to an open shutter, with the rest closed. A device measures the focal distance from the camera to the focused object.

### f2.- The projector (window)

The image projector consists of a cathode ray tube 0.4 m high and 0.71 m wide, which projects 750 images per second, corresponding to the 30 shots shifted 2.67 cm, with all shots focused on the screen with a rate of 25 times per second. The image is projected inverted, from top to bottom and from left to right. There is a shutter and lens in front of the cathode ray monitor. The shutter is, in turn, made up of 30 shutters that open and close one at a time so that at no time are more than 2 shutters open at the same time. The individual shutters are all equal and have an approximate height equal to that of the monitor; they are arranged from one side to the other and occupy a horizontal length of some 80 cm. The shutter is framed and only allows the light coming from the monitor to pass through the open shutter. Behind the shutter is a lens approximately two meters in diameter. The focal distance is 1 m, so that the lens produces a focused image of the monitor, the same size, at a distance of approximately one meter from the lens. This image will be a non-inverted image, since it inverts the image from the cathode ray screen, which was projected inverted. A second lens, approximately two meters in diameter, with a focal distance of some 5 m makes it possible to see the real image of the monitor at a distance that depends on the position of the non-inverted image formed by the first lens. The lenses are positioned using the signal of the distance from the focal plane that is emitted by the camera.

### f) Possible applications

The application is for transmission of television, filming, and viewing of video movies, programs with close-ups in which the subjects are inside the viewer's room, and landscapes and open spaces that are seen in the distance. The image obtained with the camera can be seen using an existing stereoscopic system, so this extra information is ignored.

## Claims

1. Camera for capturing images, consisting of a obscure camera containing
- a horizontal slit, much longer than it is high
- a multiple shutter consisting of one or several series or rows of individual adjacent shutters
- a focusing system made up of one or several lenses or mirrors and a mechanism for adjusting the focus
- a device that generates a signal that represents the focal distance at which the focused object is located, and the degree of angular aperture of the image
- a high-speed image sensor
- a device that controls the sequential opening and closing of the shutters.

2. The camera for capturing images of claim 1, wherein the shutter opening control is such that the passage of light will successively change from one to another shutter of each series or row of shutters.

3. The camera for capturing images of claim 1, wherein the opening and closing of all shutters takes place several times each second according to a time law that assigns a time fraction to each shutter.

4. The camera for capturing images in three dimensions of claim 1, wherein said camera obtains a series of images corresponding to different positions of the point of view obtained sequentially by the controlled opening of the shutter, and wherein the focused objects occupy a position that does not change when there is a change in the position of the point of view to which they correspond, and wherein unfocused objects occupy different positions in the images corresponding to different positions of the point of view.

5. The camera for capturing images in three dimensions of claim 1, wherein said camera uses a combination of shutter aperture on two different series or planes to achieve greater resolution when capturing images, especially those closer to the camera.

6. A lens for the camera slit, wherein said lens is a fragment of a lens with a circular cross-section between two planes, wherein it is cut in a manner such that it is limited to a space much longer than it is high, comprised between two planes parallel to each other and to the axis of the lens, arranged symmetrically with respect to the axis and to a diameter of the circular cross-section lens.

7. The lens for the camera slit of claim 6, wherein said lens has two dioptric surfaces defined as ruled surfaces with straight-line generatrices, the generatrix of one side being orthogonal to the generatrix of the other side.

8. Device for the reproduction of images in three dimensions, which contains:
- a screen that generates images, such as a cathode ray tube
- a group of lenses or mirrors for positioning, focus, and correction of color and other optical aberrations
- a system of lenses to adapt the image for focusing or positioning the image and to control the angular amplitude or zoom
- a device for controlling the position of the focus of the real or virtual image on the monitor screen and the angle of aperture of the image
- one or several rows of multiple shutter diaphragms, each consisting of a row of individual shutters wherein the individual shutters are in a vertical position and each one is next to the previous one, forming a row.

9. The device for the reproduction of images in three dimensions of claim 8, wherein the image presented is seen at a greater or lesser distance from the background or closer to the observer, or between the screen and the observer by forming a virtual or real image (of the image projection screen) through the lens or mirror closest to the observer.

10. The device for the reproduction of images in three-dimensions of claim 8, wherein the position at which the real or virtual image that is seen by the observer as specified in claim 8 is controlled by a positioning device which in turn is governed by the device that can generate a signal representing the focal distance in the camera specified in claim 1.

11. The device for the reproduction of images of claim 8, wherein the image that is visible changes or can change as the position of the observer moves to the left or to the right and does not change when the observer moves to the front or back, as a result of the action of the shutters arranged in a horizontal row, as specified in claim 8.

12. The device for the reproduction of images in three dimensions of claim 8, wherein the rows of shutters are located either on the internal focal plane of the outermost lens, or on an interior plane that produces a virtual image of the shutters with the outer lens, or on an interior plane that produces a real image of the shutters farther out than the lens and that the point at which the observer, or a combination of two or three observers, must be located such that the images located very far in the distance, at an intermediate distance, or closer to the observer can be viewed.

13. The device for the reproduction of images of claim 8, wherein the device uses a combination of aperture of shutters located on two-different planes to increase the resolution of the image, especially in the focus of nearby objects.
